# EUROPÄISCHE PATENTSCHRIFT

(11) **EP 2 029 304 B1**
(45) Veröffentlichungstag und Bekanntmachung des Hinweises auf die Patenterteilung: **26.07.2017**
(21) Anmeldenummer: 07727675.6
(22) Anmeldetag: 03.04.2007
(51) Int. Cl.: B23D 51/02

(54) **FÜHRUNGSEINRICHTUNG FÜR EIN HUBBEWEGUNGEN DURCHFÜHRENDES SÄGEBLATT**
JIGSAW MACHINE WITH SAW BLADE AND GUIDE DEVICE
MACHINE À SCIER À MOUVEMENT ALTERNATIF DOTÉE D'UNE LAME DE SCIE AVEC DISPOSITIF DE GUIDAGE

(30) Priorität: 01.06.2006 DE 102006026022
(43) Veröffentlichungstag der Anmeldung: 04.03.2009
(73) Patentinhaber: Robert Bosch GmbH, 70442 Stuttgart (DE)
(72) Erfinder: CASOTA, Marcel, 4460 Gelterkinden (CH)
(86) Internationale Anmeldenummer: PCT/EP2007/053204
(87) Internationale Veröffentlichungsnummer: WO 2007/137894

(56) Entgegenhaltungen:
- EP-A1- 0 736 353
- DE-C1- 4 320 233

## Beschreibung

### Stand der Technik

Hubbewegungen durchführende Sägeblätter sind bekannt. Sie werden insbesondere in Stichsägen und ähnlichen Elektrowerkzeugen eingesetzt. Die seitliche Führung beziehungsweise Abstützung des Sägeblattes während des Sägevorganges ist maßgeblich für die Güte des Schnittes verantwortlich. Das Sägeblatt tendiert nämlich während der Hubbewegung dazu, dem ihm durch das Schnittgut entgegengebrachten Widerstand auszuweichen. In Schnittrichtung betrachtet ist demzufolge eine Bewegung des Sägeblattendes (des nicht in die angetriebene Spanneinrichtung eingespannten Endes) nach links oder rechts festzustellen; in Schnittrichtung betrachtet ist demzufolge eine Abweichung des Sägeblattes aus der ihm zugedachten, im Wesentlichen zur Oberfläche des Schnittgutes senkrechten Hubbewegung festzustellen. Hierunter leidet die Schnittgüte. Überdies wird die Standzeit des Sägenblattes durch die mechanische Durchbiegung stark reduziert.

Im Stand der Technik ist es daher bekannt, das Sägeblatt zu führen, um so freie Weglängen innerhalb der Hubbewegung, innerhalb derer das Sägeblatt ausweichen kann, klein zu halten. So sind Lösungen gebräuchlich, bei denen die Führung des Sägeblattes an Stichsägen über einen Einstich an einer Führungs- oder Abstützrolle zwischen der das Sägeblatt antreibenden Spanneinrichtung und dem Schnittgut erfolgt und/oder dieses seitlich geführt wird. Weiter sind Lösungen bekannt, die diese Führung zusätzlich über separate Führungsbacken im Bereich unmittelbar über dem Schnittgut, beispielsweise in einem dem Elektrowerkzeug zugeordneten Sägebeziehungsweise Führungstisch, bewirken. Hierzu werden beispielsweise beidseitig dem Sägeblatt angeordnete Führungsbacken verwendet.

An diesen Lösungen ist nachteilig, dass die bekannten Führungen des Sägeblattes ein Ausweichen des Sägeblattes während der Hubbewegung nicht ausreichend verhindern. Das Sägeblatt selbst wird in einer bogenförmigen Art und Weise um das Führungselement herum verformt (insbesondere, wenn nur eine Führungsrolle zwischen Spanneinrichtung und Schnittgut vorhanden ist), wobei das eine Führungselement hinsichtlich der Ausbildung der Bogenform als Knotenpunkt wirkt. Wandert demzufolge, in Schnittrichtung betrachtet, das Sägeblatt im Schnittgut linksseitig aus, wird es zwischen der Führungsrolle und der Spanneinrichtung nach rechts durchgebogen beziehungsweise verformt. Diese zwischen der Führungsrolle und der Spanneinrichtung auftretende Deformation bewirkt nicht nur eine reduzierte Standzeit des Sägeblattes, sondern ist auch als mitwirkende Ursache des Ausweichens beziehungsweise Verlaufens des Sägeblattes im Schnittgut anzusehen. Im Bereich der Spanneinrichtung wurde folglich versucht, durch Zentriereinrichtungen das Sägeblatt an der Ausführung dieser Deformation weitgehend zu hindern; diese Lösung brachte aber weder den gewünschten Erfolg, noch war sie mit vertretbarem Kostenaufwand oder gar anwenderfreundlich realisierbar. Die Führung durch separate Führungsbacken zwischen der Führungsrolle und dem Schnittgut indes ist aufwendig und anwenderunfreundlich, da für unterschiedliche Sägeblätter und Sägeblattstärken jeweils eine Verstellung der Backen vorgenommen werden muss. Überdies bewirkt die aus diesen Führungsbacken auftretende Reibung eine Abnutzung und thermische Belastung sowohl des Sägeblattes als auch der Führungsbacken. Ferner sind diese im Stand der Technik bekannten, erweiterten Führungen nicht im Stande, die Pendelbewegungen des Sägeblattes, wie sie etwa bei Pendelhubstichsägen gebräuchlich sind, mitzumachen. Die Erfindung betrifft eine Führungseinrichtung gemäß dem Oberbegriff des Anspruchs 1. Eine solche Führungseinrichtung ist der EP 0 736 353 A1 zu entnehmen.

### Offenbarung der Erfindung

Demgegenüber bietet die Erfindung den Vorteil, eine Abstützung beziehungsweise Führung des Sägeblattes bereitzustellen, mit der eine bessere Schnittqualität erreicht werden kann, und die die oben genannten Nachteile vermeidet.

Hierzu ist eine Führungseinrichtung für ein Hubbewegungen durchführendes Sägeblatt, insbesondere für ein Elektrowerkzeug, mit einer am Einspannende des Sägeblattes angreifenden Spanneinrichtung, und einer dem Sägeblattrücken zugeordneten, mit axialem Abstand zur Einspanneinrichtung angeordneten Pendelführungseinrichtung vorgesehen, bei der die Pendelführungseinrichtung mindestens zwei axial voneinander beabstandete Führungselemente hat. Eine Pendelführungseinrichtung im Sinne der Erfindung ist eine solche, die die Pendelbewegungen eines Sägeblattes in Schnittrichtung beziehungsweise gegen die Schnittrichtung mitmacht. Axial, also in Richtung der Sägeblatt-Längserstreckung, zu der am Ende des Sägeblattes angreifenden Spanneinrichtung (die dem Antrieb des Sägeblattes in Auf- und Abrichtung dient und als nicht schneidendes Ende des Sägeblattes ausgebildet ist) ist beabstandet demzufolge eine Pendelführungseinrichtung angeordnet, die ihrerseits wenigstens zwei Führungselemente umfasst, die axial, also in Sägeblatt-Längserstreckung, voneinander beabstandet sind. Hierdurch werden zwischen der Spanneinrichtung und dem Schnittgut im Längsverlauf des Sägeblattes zwei weitere Führungselemente geschaffen, die die geschilderte bogenförmige Durchbiegung praktisch vollständig verhindern, die bei nur einem Führungselement zwischen Schnittgut und Spanneinrichtung beziehungsweise auch bei einer dem Schnittgut unmittelbar benachbarten Backenführung und einer weiteren Führung zu beobachten ist.

Die Führungselemente sind als Führungsrollen ausgebildet. Hierdurch werden Reibungsverluste zwischen dem Hubbewegungen durchführenden Sägeblatt und den Führungselementen drastisch reduziert, da die Rollen die Auf- und Ab-Bewegungen entsprechend mitmachen und daher keine Reibbeziehungsweise Bremswirkung erfolgt, die im Übrigen mit thermischen Verlusten und damit einhergehenden Passungsproblemen aufgrund unterschiedlicher Temperaturkoeffizienten verschiedener Materialien verbunden wäre, und die überdies zu einer verringerten Material-Standzeit führen würde.

Die Führungsrollen weisen jeweils eine im Wesentlichen konische Führungsnut auf. Eine im Wesentlichen konische Führungsnut ist eine solche, die schräge Seitenwandungen aufweist. Dem Sägeblatt ist es daher, ungeachtet seiner Stärke, möglich, sich in den Führungsrollen während der Hubbewegungen selbstständig zu zentrieren. Ein umständliches Justieren, insbesondere bei Verwendung unterschiedlicher Sägeblattstärken oder Sägeblatttypen, wird überflüssig, da das Sägeblatt stets bestrebt sein wird, die hinsichtlich des Gleichgewichts der einwirkenden Kräfte günstigste Lage am Grund der konischen Führungsnut anzunehmen, nicht an deren schrägen Seitenwandungen. Ferner ist diese Art der Führung, da sie ausschließlich an dem der Sägeblattverzahnung abgewandten Sägeblattrücken beziehungsweise den dem Sägeblattrücken zugeordneten Seitenflächen des Sägeblattes angreift, von der Art der Sägeblattverzahnung (geschränkt, gewellt, freiwinkelgeschliffen) und von dem Abstand zwischen Zahngrund und Sägeblattrücken völlig unabhängig.

Erfindungsgemäß ist vorgesehen, dass die Pendelführungseinrichtung zur Aufnahme der Führungsrollen ein Verbindungselement aufweist. Als Verbindungselement sind beispielsweise beiderseits der Führungsrollen angeordnete Verbindungsbrücken, Platinen, Tragelemente oder Ähnliches anzusehen, die die Führungsrollen zueinander in einer genau definierten Position fixieren und hierbei, beispielsweise durch Aufnahme von Führungsrollenachsen, eine freie Drehbewegung der Führungsrollen ermöglichen. Ein solches Verbindungselement kann auch als Käfig oder in ähnlicher Weise ausgebildet sein.

Erfindungsgemäß ist das Verbindungselement an einem Rollenhebel drehgelagert. Der Rollenhebel ist hierbei als Halterung für das aus dem Verbindungselement und der Führungsrolle ausgebildete Bauteil anzusehen, die eine Drehlagerung aufweist, die das Verbindungselement aufnimmt. Das Verbindungselement kann sich demzufolge am Rollenhebel um eine parallel zu den in ihm gelagerten Führungsrollenachsen liegende Drehachse in einem zumindest eingeschränkten Bereich frei drehen. Hierdurch ist es sichergestellt, dass auch bei Ausführung von Pendelhubbewegungen beide Führungsrollen den Kontakt zum Sägeblattrücken behalten und eine Führung des Sägeblattes in jeder Phase der Pendelhubbewegung sichergestellt ist.
Die Erfindung stellt ferner ein Elektrowerkzeug bereit, das eine oben beschriebene Führungseinrichtung aufweist.
In einer bevorzugten Ausführungsform ist das Elektrowerkzeug ein Elektrohandwerkzeug, also ein solches, das von einem Benutzer mobil und aus der Hand betrieben werden kann. In einer besonderen Ausführungsform der Erfindung ist dieses Elektrohandwerkzeug als Stichsäge ausgebildet. Gerade in dieser Ausführungsform ist der Einsatz der erfindungsgemäßen Führungseinrichtung ganz besonders vorteilhaft.

Weitere vorteilhafte Ausführungsformen der Erfindung ergeben sich aus den Unteransprüchen und Kombinationen derselben.

### Kurze Beschreibung der Zeichnungen

Die Erfindung wird nachfolgend anhand von Zeichnungen näher erläutert.
- Figur 1: zeigt eine schematische Darstellung der Führungseinrichtung;
- Figur 2: eine Pendelführungseinrichtung mit zwei axial voneinander beabstandeten Führungselementen und
- Figur 3: zeigt eine Führungseinrichtung in Einbaulage in einer Stichsäge.

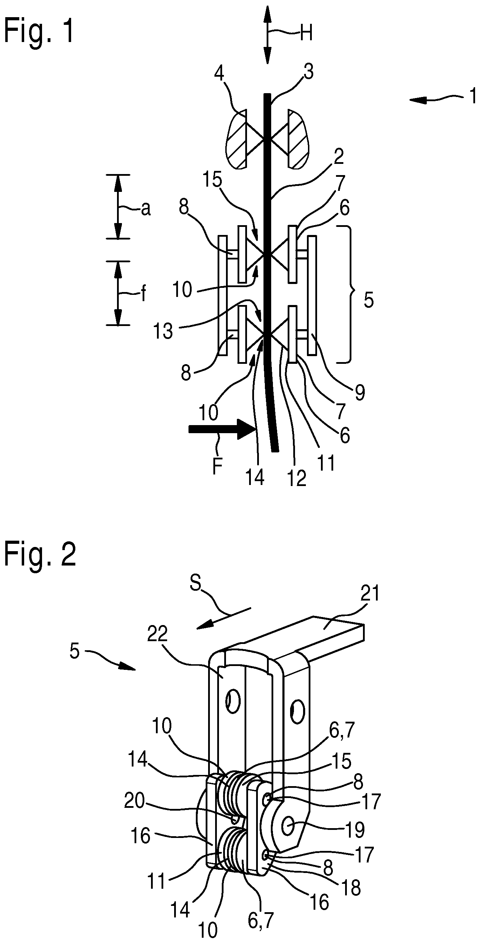

Figur 1 zeigt in schematischer Darstellung eine Führungseinrichtung 1 für ein Hubbewegungen H durchführendes Sägeblatt 2. Diese weist eine an einem Einspannende 3 des Sägeblattes 2 angreifende Spanneinrichtung und, mit einem in Längserstreckung des Sägeblattes gerichteten axialen Abstand a hierzu, eine Pendelführungseinrichtung 5 auf. Die Pendelführungseinrichtung 5 weist zwei Führungselemente 6 auf, die als Führungsrollen 7 ausgebildet sind, welche auf Führungsrollenachsen 8 drehbar gelagert sind, wobei die Führungsrollenachsen 8 zueinander einen Achsabstand f aufweisen. Die Führungsrollenachsen 8 sind ihrerseits beidseitig in einem Verbindungselement 9 gelagert. Die Führungsrollen 7 weisen jeweils umfangsseitig mittig eine im Wesentlichen konische Führungsnut 10 auf, die eine Selbstzentrierung des Sägeblattes 2 in der Führungsrolle 7 bewirkt. Die konischen Führungsnuten 10 beider Führungsrollen 7 fluchten zueinander.

Wird im Zuge des Sägevorgangs auf das Sägeblatt 2 eine Kraft F in Richtung des Richtungspfeils ausgeübt, so wird das Hubbewegungen H ausführende Sägeblatt 2 in Richtung der Kraft F ausweichen. Die als untere Führungsrolle 11 ausgebildete Führungsrolle 7 der Pendelführungseinrichtung 5 wird durch ihre Ausgestaltung mit einer konischen Führungsnut 10 dieser in Richtung der Kraft F erfolgenden Ausweichbewegung entgegenwirken, da das Sägeblatt bei diesem Ausweichvorgang entlang einer aufsteigenden Flanke 12 der konischen Führungsnut 10 aufgleiten müsste, so dass an der unteren Führungsrolle 11 an der aufsteigenden Flanke 12 eine der Kraft F entgegengesetzt wirkende Kraft auftritt, die das Sägeblatt 2 zurück in eine tiefste Stelle 13 drängt, die am Grund 14 der Führungsnut 10 ausgebildet ist. Die Position an diesem Grund 14 der Führungsnut 10 ist die aufgrund des Kräftegleichgewichts bevorzugte Position des Sägeblattes 2, dieses wird daher bestrebt sein, diese Position stets schnellstmöglich wieder anzunehmen. Ähnliche Verhältnisse wie für die untere Führungsrolle 11 geschildert, treffen auch für die andere, als obere Führungsrolle 15 ausgebildete Führungsrolle 7 der Pendelführungseinrichtung 5 zu. Durch die Ausgestaltung der Führungsrollen 7 mit einer konischen Führungsnut 10 ist es gleichgültig, ob eine Bewegung des Sägeblattes 2 nach links oder rechts, relativ zur Schnittrichtung, auftritt. Das Sägeblatt wird stets bestrebt sein, die im weitest gehenden Kräftegleichgewicht liegende Position am Grund 14 der konischen Führungsnut 10 einer jeden Führungsrolle 7 schnellstmöglich wieder anzunehmen. Hierdurch ergibt sich, gerade durch die Dynamik der Hubbewegungen H in Verbindung mit der Ausgestaltung der Führungsrollen 7 mittels konischer Führungsnut 10, wobei jeweils der Grund 14 einer jeden Führungsrolle 7 mit dem Grund 14 der jeweils anderen Führungsrolle 7 fluchtet, eine Zwangszentrierung und Zwangsstabilisierung des Sägeblattes 2 in Betrieb.

Figur 2 zeigt die Pendelführungseinrichtung 5 mit den axial voneinander beabstandeten Führungselementen 6, die wiederum als Führungsrollen 7 ausgebildet sind. Die Führungsrollen 7 werden beidseitig von einem Verbindungselement 9 gehalten, wobei jede Führungsrolle 7 auf einer ihr zugeordneten Führungsrollenachse 8 drehbar gelagert ist. Das Verbindungselement 9 ist jeweils in Form einer Platine 16 ausgebildet, die Aufnahmen 17 für die Führungsrollenachsen 8 aufweist. Zwischen den Verbindungselementen 9 sind die Führungsrollen 7 dergestalt gelagert, dass der Grund 14 der konischen Führungsnut 10 der unteren Führungsrolle 11 mit dem Grund 14 der konischen Führungsnut 10 der oberen Führungsrolle 15 fluchtet. Diese gesamte Anordnung bildet ein Führungsrollenpendel 18 aus. Das Führungsrollenpendel 18 ist an dem jeweils linken beziehungsweise rechten Verbindungselement 9 mittels einer linken Pendelachse 19 und einer rechten Pendelachse 20 in einem Rollenhebel 21, der im Wesentlichen als zwei-zinkige Gabel 22 ausgebildet ist, drehgelagert. Hierdurch ist es dem Führungsrollenpendel 18 möglich zu bewirken, jede der beiden Führungsrollen 7 während des Betriebs, insbesondere auch bei Ausführung von Pendelhubbewegungen, stets Kontakt zu dem nicht dargestellten Sägeblattrücken des nicht dargestellten Sägeblattes 2 hat. In keiner Phase auch der Pendelhubbewegung wird der Kontakt zwischen den Führungsrollen 7 und dem Sägeblattrücken aufgegeben. Dies gilt insbesondere dann, wenn die Pendelhubbewegung über den Rollenhebel 21 selbst bewirkt wird, wenn also im Zuge der Hubbewegung H (wie in Figur 1 dargestellt) der Rollenhebel 21 durch Ausübung einer in Schnittrichtung S erfolgenden, periodisch am Sägerücken des Sägeblattes 2 angreifenden, über die Führungsrollen 7 übertragenen Kraft, die sich zur Hubbewegung H (Figur 1) addiert, die Pendelhubbewegung erst erzeugt.

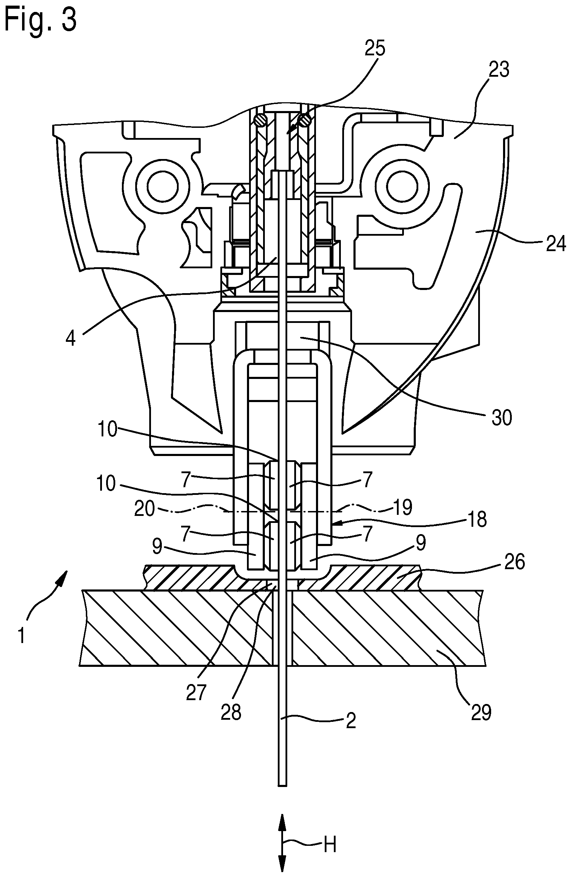

Figur 3 zeigt die Führungseinrichtung 1 in Einbaulage in einer Stichsäge 23, deren vorderer Getriebekopf 24 im Schnitt dargestellt ist. An einem Hubstangenmechanismus 25, der zur Erzeugung der Hubbewegung H vorgesehen ist, erfolgt an der Spanneinrichtung 4 die kraftschlüssige Fixierung des Sägeblattes 2, so dass dieses die Hubbewegung H des Hubstangenmechanismus 25 mitmacht. Die Stichsäge 23 weist einen nur partiell dargestellten Arbeitsfuß 26 auf, der im Bereich eines Sägeblattdurchtritts 27 eine partielle Öffnung 28 aufweist. Der Arbeitsfuß 26 dient dem Aufsetzen und der Führung der Stichsäge 23 auf einem Schnittgut 29. Dem Arbeitsfuß 26 unmittelbar benachbart wird das Sägeblatt 2 über die Führungsrollen 7, die in dem aus Verbindungselementen 9 gebildeten Führungsrollenpendel 18 drehbar gelagert sind, geführt. Die Verbindungselemente 9 ihrerseits sind über die linke Pendelachse 19 beziehungsweise die rechte Pendelachse 20 im Rollenhebel 21 drehgelagert, so dass der in dieser Ansicht dem Betrachter abgewandte Sägeblattrücken des Sägeblattes 2 in den jeweils einen fluchtenden, hier nicht sichtbaren Grund 14 aufweisenden Führungsnuten 10 aufweisenden Führungsrollen 7 geführt ist, gleichgültig, in welcher Phase einer Pendelhubbewegung (also einer Bewegung, die neben der Hubbewegung H als weitere Komponente eine auf den Betrachter zu geschehende Bewegung und zurück ausführt) das Sägeblatt 2 sich gerade befindet. Der Rollenhebel 21 ist hierzu mit in einer hier nicht näher dargestellten Rollenhebelaufnahme 30 der Stichsäge 23 verbunden, insbesondere wirkverbunden.

## Patentansprüche

1. Führungseinrichtung für ein Hubbewegungen durchführendes Sägeblatt, insbesondere für ein Elektrowerkzeug, mit einer am Einspannende des Sägeblattes angreifenden Spanneinrichtung und einer dem Sägeblattrücken zugeordneten, mit axialem Abstand zur Einspanneinrichtung angeordneten Pendelführungseinrichtung, wobei die Pendelführungseinrichtung (5) mindestens zwei axial voneinander beabstandete Führungselemente (6) aufweist, die als Führungsrollen (7) ausgebildet sind und jeweils eine im Wesentlichen konische Führungsnut (10) aufweisen, **dadurch gekennzeichnet, dass** die Pendelführungseinrichtung (5) zur Aufnahme der Führungsrollen (7) ein Verbindungselement (9) aufweist, das an einem Rollenhebel (21) drehgelagert ist.

2. Führungseinrichtung nach Anspruch 1, **dadurch gekennzeichnet, dass** der Grund (14) der konischen Führungsnut (10) der einen Führungsrolle (11) mit dem Grund (14) der konischen Führungsnut (10) der anderen Führungsrolle (15) fluchtet.

3. Führungseinrichtung nach Anspruch 2, **dadurch gekennzeichnet, dass** das Verbindungselement (9) und die Führungsrollen (11,15) ein Führungsrollenpendel (18) bilden.

4. Führungseinrichtung nach Anspruch 3, **dadurch gekennzeichnet, dass** durch den Rollenhebel eine Pendelhubbewegung bewirkt wird.

5. Elektrowerkzeug, **gekennzeichnet durch** eine Führungseinrichtung (1) nach einem der vorhergehenden Ansprüche.

6. Elektrowerkzeug nach Anspruch 5, **dadurch gekennzeichnet, dass** das Elektrowerkzeug ein Elektrohandwerkzeug ist.

7. Elektrohandwerkzeug nach Anspruch 6, **dadurch gekennzeichnet, dass** das Elektrohandwerkzeug eine Stichsäge (23) ist.

## Claims

1. Guide device for a saw blade executing reciprocating movements, in particular for an electric tool, with a clamping device acting on the clamping-in end of the saw blade and a pendulum guide device which is assigned to the saw-blade back and is arranged at an axial distance from the clamping-in device, wherein the pendulum guide device (5) has at least two guide elements (6) which are spaced apart axially from each other, are designed as guide rollers (7) and each having a substantially conical guide groove (10), **characterized in that**, for accommodating the guide rollers (7), the pendulum guide device (5) has a connecting element (9) which is rotationally mounted on a roller lever (21).

2. Guide device according to Claim 1, **characterized in that** the base (14) of the conical guide groove (10) of the one guide roller (11) is aligned with the base (14) of the conical guide groove (10) of the other guide roller (15).

3. Guide device according to Claim 2, **characterized in that** the connecting element (9) and the guide rollers (11, 15) form a guide roller pendulum (18).

4. Guide device according to Claim 3, **characterized in that** a pendulum reciprocating movement is brought about by the roller lever.

5. Electric tool, **characterized by** a guide device (1) according to one of the preceding claims.

6. Electric tool according to Claim 5, **characterized in that** the electric tool is a portable electric tool.

7. Portable electric tool according to Claim 6, **characterized in that** the portable electric tool is a jigsaw (23).

## Revendications

1. Dispositif de guidage pour une lame de scie effectuant des mouvements de va-et-vient, en particulier pour un outil électrique, comprenant un dispositif de serrage venant en prise à une extrémité de serrage de la lame de scie et un dispositif de guidage pendulaire associé au dos de la lame de scie, disposé à distance axiale du dispositif de serrage, le dispositif de guidage pendulaire (5) présentant au moins deux éléments de guidage (6) espacés axialement l'un de l'autre, qui sont réalisés sous forme de rouleaux de guidage (7) et qui présentent à chaque fois une rainure de guidage essentiellement conique (10), **caractérisé en ce que** le dispositif de guidage pendulaire (5) présente un élément de liaison (9) pour recevoir les rouleaux de guidage (7), qui est supporté à rotation sur un levier à rouleaux (21).

2. Dispositif de guidage selon la revendication 1, **caractérisé en ce que** la base (14) de la rainure de guidage conique (10) de l'un des rouleaux de guidage (11) est alignée avec la base (14) de la rainure de guidage conique (10) de l'autre rouleau de guidage (15).

3. Dispositif de guidage selon la revendication 2, **caractérisé en ce que** l'élément de liaison (9) et les rouleaux de guidage (11, 15) forment un pendule de rouleaux de guidage (18).

4. Dispositif de guidage selon la revendication 3, **caractérisé en ce qu'**un mouvement de course pendulaire est provoqué par le levier à rouleaux.

5. Outil électrique, **caractérisé par** un dispositif de guidage (1) selon l'une quelconque des revendications précédentes.

6. Outil électrique selon la revendication 5, **caractérisé en ce que** l'outil électrique est un outil électrique manuel.

7. Outil électrique manuel selon la revendication 6, **caractérisé en ce que** l'outil électrique manuel est une scie sauteuse (23).
